# EUROPÄISCHE PATENTANMELDUNG

(11) **EP 1 103 191 A1**
(43) Veröffentlichungstag der Anmeldung: **30.05.2001**
(21) Anmeldenummer: 00124707.1
(22) Anmeldetag: 11.11.2000
(51) Int. Cl.: A23L 1/035, A23D 7/00

(54) **Lebensmittel in Form von Öl-in-Wasser oder Wasser-in-Öl Emulsionen**

(30) Priorität: 27.11.1999 DE 19957246
(71) Anmelder: Clariant GmbH, 65929 Frankfurt am Main (DE)
(72) Erfinder: Scherl, Franz Xaver, Dr., 84508 Burgkirchen (DE); Turowski-Wanke, Angelika, Dr., 65779 Kelkheim (DE); Fisch, Tanja, 84508 Burgkirchen (DE)

(57) **Zusammenfassung**

Diese Art von Lebensmitteln insbesondere Margarine, enthält als Emulgator Umsetzungsprodukte von Sorbit mit Triglyceriden.

## Beschreibung

Die Erfindung betrifft den Einsatz von Sorbitolfettsäureester, insbesondere von Sorbitolestern auf Basis des Rapsöls in Nahrungsmitteln als geschmacksneutraler Emulgator mit sehr effektiver Wirkung auf die Erniedrigung der Grenzoberflächenspannung von sowohl polaren als auch unpolaren Flüssigkeiten und hoher Stabilität auch bei Temperaturbelastung und bei geringeren Einsatzkonzentrationen. Die erfindungsgemäßen, niedrig schmelzenden Emulgatoren auf Basis nachwachsender Rohstoffe zeigen herausragende hydrophile und hydrophobe Eigenschaften, die eine gute Emulgatorenwirkung in Wasser-in-Öl Emulsionen bedingen.

In DE 29 50 917 wird die Verwendung von Polyoxyethylensorbitolfettsäureestern, wobei mindestens zwei Hydroxygruppen des Sorbitols verestert sind, als W/O-Emulgatoren beschrieben.

In DE 2 339 149 ist der Einsatz von Partialestern von Sorbitol mit alpha-verzweigten Monocarbonsäuren, wobei die Hydroxygruppen des Sorbitols zu 50 bis 90 % verestert sind, als W/O-Emulgatoren in kosmetischen Zubereitungen beschrieben.

DE 197 27 950 beschreibt die Herstellung von Mischungen, die größtenteils aus Sorbitmonoestern, Sorbitdiestern und Partialglyceriden bestehen.

In EP 254 376 wird ein Verfahren zur Herstellung von Partialpolyhydroxyfettsäureestern aus Zuckeralkoholen und C₈-C₂₂-Fettsäurealkylestern und deren Einsatz als Emulgator in kosmetischen und pharmazeutischen Produkten, sowie in Lebensmitteln beansprucht.

In der Anmeldung DE 199 06 368.0 wird beschrieben, dass die in DE 197 27 950 beschriebene Mischung von Estern als Emulgator für kosmetische und pharmazeutische Zubereitungen eingesetzt werden kann.

Gegenstand der vorliegenden Erfindung sind Lebensmittel in Form von Öl-in-Wasser oder Wasser-in-Öl Emulsionen, die als Emulgatoren ein Umsetzungsprodukt von Sorbit und Triglyceriden enthalten.

Die erfindungsgemäß benutzten Emulgatoren werden hergestellt durch Reaktion von Sorbit mit Fettsäuremethylestern oder Fettsäuretriglyceriden entsprechend dem in DE 197 27 950 beschriebenen Verfahren, wobei als Katalysatoren hier allerdings übliche alkalische Katalysatoren, insbesondere Natriummethylat eingesetzt werden. Der Fettsäurerest in den Fettsäuremethylestern und Fettsäuretriglyceriden enthält im allgemeinen 8 bis 22 C-Atome und kann geradkettig oder verzweigt, gesättigt oder ungesättigt sein. Als Fettsäuretriglyceride kommen alle nativen tierischen oder pflanzlichen Öle, Fette und Wachse in Frage, beispielsweise Olivenöl, Rüböl, Palmkernöl, Sonnenblumenöl, Kokosöl, Leinöl, Ricinusöl, Sojabohnenöl, gegebenenfalls auch in raffinierter oder hydrierter Form. Da diese natürlichen Fette, Öle und Wachse normalerweise Mischungen von Fettsäuren mit unterschiedlicher Kettenlänge darstellen, gilt dies auch für die Fettsäurereste in den erfindungsgemäßen Emulgatoren. Besonders bevorzugt ist die Verwendung von Rapsöl, wobei das Rapsöl nur geringe Anteile an Erucasäure enthält.

Die Umsetzung von Sorbit mit den Fettsäuretriglyceriden oder Fettsäuremethylestern geschieht im Eintopfverfahren ohne Lösemittel bei Temperaturen von ungefähr 120 - 140°C in Gegenwart eines alkalischen Katalysators. Die Reaktionszeit beträgt im allgemeinen 12 bis 13 Stunden. Da Sorbit üblicherweise als wässrige Lösung im Handel ist, muss zunächst das Wasser entfernt werden. Dies geschieht durch Destillation bei maximal 120°C unter vermindertem Druck. Das Molverhältnis von Sorbit zu Fettsäuretriglyceriden beträgt im allgemeinen 1:4,5, vorzugsweise 1:3,5 bis 1:4,5.

Die Umsetzungsprodukte können auch alkoxyliert sein, vorzugsweise ethoxyliert, der Gehalt an Ethoxylatgruppen kann 1 bis 90 -CH₂CH₂O-Gruppen auf ein Molekül Sorbit betragen. Die Einführung der Alkoxylatgruppen kann erfolgen durch eine Alkoxylierung des Sorbits nach an sich bekannten Verfahren vor der Umesterungsreaktion.

Bedingt durch die Verwendung von Fettsäuretriglyceriden als Ausgangsprodukt enthält das Reaktionsprodukt auch noch Mono- und Di-Fettsäureglycerid sowie nicht umgesetztes Triglycerid in Abhängigkeit von dem jeweils gewählten Molverhältnis der Ausgangsverbindungen.

Die so erhaltene Mischung der verschiedenen Reaktionsprodukte eignet sich sehr gut als Emulgator für alle Arten von Lebensmitteln, die als Emulsionen vorliegen, sowohl vom Öl-in-Wasser als auch vom Wasser-in-Öl Typ, insbesondere für die Herstellung von Margarine. Die Menge der erfindungsgemäßen Umesterungsprodukte als Emulgator in diesen Emulsionen beträgt im allgemeinen 0,1 bis 8, bevorzugt 0,3 bis 5, insbesondere 0,5 bis 4 Gew.-%, bezogen auf die Lebensmittel.

### Beispiele

### Sorbitester 1

1 Mol Sorbit in Form eines 70 %igen Sorbitsirups wurden vorgelegt und das Wasser im Wasserstrahlvakuum bei 120°C abdestilliert. Nach Zugabe von 1 Gew.-% (bezogen auf die gesamte Einwaage) Kaliumcarbonat (30 %ig in Wasser bei 80°C wurde bei vollem Wasserstrahlvakuum das Wasser abdestilliert. Anschließend wurden 4 Mol raffiniertes Rapsöl zugegeben und 8 Stunden bei 140°C gerührt.

### Sorbitester 2

1 Mol Sorbit in Form eines 70 %igen Sorbitsirups wurden vorgelegt und das Wasser im Wasserstrahlvakuum bei 120°C abdestilliert. Dann wurden 1 Gew.-% (bezogen auf die gesamte Einwaage) NaOCH₃ (30 %ig in Methanol) bei 80°C zugegeben und bei vollem Wasserstrahlvakuum das Methanol abdestilliert. Dann wurden 2 Mol Laurinsäuremethylester zugegeben und 1 Stunde bei 140°C unter Stickstoff und weiterhin 12 Stunden bei 140°C und vollem Wasserstrahlvakuum erhitzt. Das entstandene Methanol wurde abdestilliert.

### Sorbitester 3

Arbeitsweise wie bei Sorbitester 2. Die Umesterung erfolgte durch Erhitzen über 11 Stunden bei 140°C mit 1 Mol Palmitinsäuremethylester.

Es wurde eine Margarine der folgenden Zusammensetzung hergestellt: 78 Gew.-% Sonnenblumenöl, 2 Gew.-% jeweils der Sorbitester 1,2 bzw. 3 und 20 Gew.-% Wasser. Die Herstellung erfolgte nach bekannten Verfahren durch Emulgieren der drei Komponenten, Unterkühlen und Kristallisieren.

## Patentansprüche

1. Lebensmittel in Form von Öl-in-Wasser oder Wasser-in-Öl Emulsionen gekennzeichnet durch einen Gehalt eines Umsetzungsproduktes von Sorbit mit Triglyceriden und/oder Fettsäuremethylestern.

2. Lebensmittel nach Anspruch 1 gekennzeichnet durch einen Gehalt von 0,1 bis 8 Gew.-% des Umsetzungsproduktes, bezogen auf das Lebensmittel.

3. Lebensmittel nach Anspruch 1 gekennzeichnet durch einen Gehalt eines Umsetzungsproduktes von Sorbit und Rapsöl.

4. Lebensmittel nach Anspruch 1, dadurch gekennzeichnet, dass es Margarine ist.
